# EUROPÄISCHE PATENTANMELDUNG

(11) **EP 2 082 812 A1**
(43) Veröffentlichungstag der Anmeldung: **29.07.2009**
(21) Anmeldenummer: 09000318.7
(22) Anmeldetag: 13.01.2009
(51) Int. Cl.: B05C 17/005, A61C 9/00, B65D 83/00

(54) **Vorrichtung zur Lagerung von fluiden Komponenten für den dentalen Bereich**

(30) Priorität: 23.01.2008 DE 102008005743
(71) Anmelder: Heraeus Kulzer GmbH, 63450 Hanau (DE)
(72) Erfinder: Grundler, Andreas, Dr., 41542 Dormagen (DE); Nehren, Klaus, 41539 Dormagen (DE); Freckmann, Michael, 50769 Köln (DE); Urbas, Holger, 47802 Krefeld (DE)
(74) Vertreter: Kühn, Hans-Christian

(57) **Zusammenfassung**

Die Erfindung betrifft eine Vorrichtung für den dentalen Bereich zur Lagerung und Ausbringung von zumindest einer fluiden Komponente, wobei die Vorrichtung zumindest eine Kartusche (2) zur Aufnahme eines Schlauchbeutels (10) aufweist, sowie eine Vorrichtung zum Ausbringen der fluiden Komponente, wobei die Kartusche den zumindest einen Schlauchbeutel dauerhaft und dicht einschließt.

## Beschreibung

Die Erfindung betrifft eine Vorrichtung zur Lagerung und Ausbringung von fluiden Komponenten für den dentalen Bereich.

Fluide Komponenten für den dentalen Bereich, insbesondere dentale Abformmaterialien werden derzeit in verschiedenen Darreichungsformen angeboten: in Tuben, in Dosen, in kleineren Hartkartuschen (ca. 60 ml) und in Schlauchbeuteln, welche in Stützkartuschen eingelegt werden können.

Neuerdings werden in der Dentalbranche neben den klassischerweise verwendeten kleinvolumigen Hartkartuschen mit ca. 60 ml Inhalt auch größere Hartkartuschen mit 300ml bis 400 ml Inhalt angeboten, die mittels Automischgeräten verarbeitet werden.

Die DE 10 2005 002 850 A1 beschreibt beispielsweise eine Vorrichtung zum Lagern und Austragen fluider Substanzen, welche wenigstens einen Behälter zur Aufnahme fluider Substanzen, der stirnseitig mit wenigstens einem Auslassstutzen versehen ist, einem Ausbringelement und zumindest einem mit dem Behälter und/oder wenigstens einem Auslassstutzen schwenkbar verbundenen Federabschnitt zur lösbaren Verriegelung des Ausbringelements an dem oder den Auslassstutzen des Behälters aufweist. Die darin beschriebene Stützkartusche wird wieder verwendet, wenn der entleerte Schlauchbeutel nach Gebrauch entsorgt worden ist.

Die DE 299 23 938 U1 beschreibt eine Vorrichtung zum Austragen eines pastösen Zweikomponenten-Gemisches, mit der sich der Schlauchbeutel öffnen lässt, ohne dass der Schlauchbeutel bzw. die pastöse Masse einem externen Druck ausgesetzt sein muss.

Die DE 102 589 531 beschreibt eine Abgabevorrichtung für fluide Substanzen bei der an den Auslassstutzen des Behälters oder an dem Mischer selbst zwei elastisch formbare Federarme vorgesehen sind. Diese weisen einen lösbaren Rastverschluss zur Verbindung des Mischers mit dem Behälter auf.

Ferner sind zum Teil mehrschichtige Schlauchbeutelsysteme bekannt, die in eine StützKartusche separat eingebracht werden. Nachteil dieser Vorrichtungen ist ein für den Anwender relativ aufwendiger Prozess zum Verbinden der Einzelteile. Die Schlauchbeutel müssen zunächst in die teilweise mehrteiligen Stützkartuschen eingesetzt werden, um diese folgend sicher mit Kopfplatten untereinander zu verbinden. Problematisch wirken sich dabei Passungstoleranzen zwischen den Einzelteilen aus, die möglicherweise zu platzenden Schlauchbeuteln, Dosierschwankungen, Empfindlichkeit beim Transport und schlechte Handlingeigenschaften durch den notwendigen Zusammenbau von Stützkartusche und Schlauchbeutel führen.

Ferner haben die bisher bekannten Hartkartuschen-Vorrichtungen den Nachteil, dass sie die Abformmaterialien nicht auf einfache Weise vor Umwelteinflüssen wie Feuchtigkeit, Gase, Strahlung etc. über einen langen Zeitraum schützen. Dazu wäre es bisher immer notwendig gewesen, die Hartkartuschen durch eine äußere oder innere Barriereschicht, die direkt auf die Hartkartusche aufgetragen wird, bezüglich der Barriereeigenschaften zu optimieren.

Bei Verwendung von Schlauchbeuteln wurden diese häufig in Primärpackmittel bis zur Verwendung dicht eingeschweißt, ggf. unter Vakuum, was einen besonderen Aufwand darstellt.

Dennoch sind die bisher bekannten Systeme insbesondere wenn feuchte- und/oder luftsensible Materialien eingefüllt werden, nicht dauerhaft lagerstabil.

Aufgabe der hier vorliegenden Erfindung ist es daher, eine Vorrichtung zur Lagerung und Ausbringung von fluiden Komponenten für den dentalen Bereich bereitzustellen, welche optimale Barriereeigenschaften bietet und ebenso eine einfache Handhabung für den Anwender gewährleistet.

Diese Aufgabe wird bereits mit den Merkmalen des unabhängigen Anspruchs gelöst.

Vorteilhafte Weiterbildungen sind den jeweiligen Unteransprüchen zu entnehmen.

Die erfindungsgemäße Vorrichtung für den dentalen Bereich zur Lagerung und Ausbringung von zumindest einer fluiden Komponente, wobei die Vorrichtung zumindest eine Kartusche zur Aufnahme eines Schlauchbeutels aufweist, sowie eine Vorrichtung zum Ausbringen der fluiden Komponente sieht vor, dass die Kartusche den zumindest einen Schlauchbeutel dauerhaft einschließt.

Dadurch ist der Schlauchbeutel in der Kartusche dicht verschlossen und somit gegen Einflüsse wie Licht, Wärme, etc. optimal geschützt. Eine derartige Vorrichtung ermöglicht ferner, dass der Schlauchbeutel sicher innerhalb der Kartusche eingeschlossen ist und somit die Empfindlichkeit gegenüber Schädigungen des Schlauchbeutels beim Transport reduziert werden.

Durch die Kartusche und den Schlauchbeutel wird die sich in dem Schlauchbeutel befindende fluide Komponente besonders gut geschützt, da die Barriereeigenschaften einer Kartusche sowie die guten Verpackungseigenschaften des Schlauchbeutels kombiniert werden.

Unter dauerhaft ist hier unter anderem zu verstehen, dass der Schlauchbeutel schon in der Kartusche befindlich ist und sich die Barriereeigenschaften von Kartusche und Schlauchbeutel ergänzen.

Der Schlauchbeutel ist somit fest in der Kartusche integriert und kann aus dieser nicht einfach entnommen werden.

Dies führt zu einem einfachen Handling der Vorrichtung und dazu, dass ein Zusammenbau von Kartusche und Schlauchbeutel nicht mehr notwendig ist und somit Zeit eingespart werden kann.

Es hat sich gezeigt, dass es vorteilhaft ist, wenn der Schlauchbeutel in der Kartusche durch einen Verschlusskolben fest verschlossen ist.

Dadurch ist die Vorrichtung besonders lagerstabil und kann bei Bedarf sofort eingesetzt werden.

In einer vorteilhaften Ausgestaltungsform sieht die Erfindung vor, dass der Verschlusskolben zum Auspressen der fluiden Komponente des Schlauchbeutels in der Kartusche geeignet ist.

Durch den Verschlusskolben wird dann bei Bedarf die fluide Komponente des Schlauchbeutels befördert und anschließend verarbeitet.

Mit handelsüblichen Mixgeräten oder auch Automixgeräten für dentale Abformmassen wird das Material durch die Kartuschen gefördert. Durch den Kolbenvorschub des Mixgerätes, der auf den Verschlusskolben wirkt, werden die fluiden Komponenten im Inneren des Schlauchbeutels über eine Vorrichtung zum Ausbringen der fluiden Komponente, einer Art Kartuschenauslass entleert. Der Schlauchbeutel wird während der Förderung zusammengefaltet.

Im Detail wird dabei die Förderkraft des Automixgerätes gleichmäßig auf die Fläche des Verschlusskolbens der Hartkartusche übertragen. Diese Kraft wirkt dann wiederum über den Verschlusskolben auf das Schlauchbeutelende in der Hartkartusche und der Schlauchbeutel wird über den Kartuschenauslass entleert - und gleichzeitig zusammengefaltet. Somit verkleinert sich das Volumen des Schlauchbeutels in der Kammer der Kartusche.

Idealerweise hat der Verschlusskolben eine Entlüftungsmöglichkeit um vorhandene Luft und/oder Gase in der Kammer der Kartuschen zwischen dem Schlauchbeutel und der Kartuschenwandung beim Fördervorgang entweichen zu lassen um einen zusätzlichen Druckaufbau in der Kartuschenkammer zu vermeiden und dadurch potentielle Dosierungsschwankungen zu unterbinden.

Die ausgeförderte Paste wird dann z.B. in einem dynamischen Mischer mit einer zweiten Komponente aus z.B. einer zweiten Kammer der Hartkartusche zusammengeführt, homogen vermischt und abschließend verarbeitet.

Das Öffnen des/der Schlauchbeutel/s kann ebenfalls über handelsübliche Mechanismen gewährleistet werden. So kann z.B. der Öffnungsmechanismus bisher bekannter Automix-Systeme für Schlauchbeutel in Kombination mit einer Stützkartusche verwendet werden.

Weiterhin ist es denkbar, die Inliner mit Sollrissstellen im Bereich der Auslässe der Hartkartusche zu versehen, und somit das Öffnen des Inliners bei Belastung mit Förderkraft durch ein Automixgerät zu gewährleisten.

Dadurch ist ein sauberes und dosierungsgenaues Arbeiten mit der fluiden Komponente möglich.
Vorteilhaft ist es, wenn die Kartusche aus Kunststoffen insbesondere Polyethylen, Polypropylen, glasverstärktem Kunststoff oder Polyamid gefertigt ist

Die Erfindung sieht in einer vorteilhaften Ausgestaltungsform vor, dass der Schlauchbeutel ein Verbundfolienbeutel ist.

Dabei ist es von Vorteil, wenn der Verbundfolienbeutel aus drei Schichten besteht, bevorzugt aus einer Polypropylen-Aluminium-Polypropylenschicht.
Dieser Verbundfolienbeutel ist besonders leicht und bietet optimale Barriereeigenschaften.

Vorteilhafterweise weist die Vorrichtung zwei Kartuschen auf.
Besonders im dentalen Bereich werden oftmals zwei Komponenten miteinander vermengt. Die Vorrichtung ermöglicht somit, dass zwei zu vermengende Komponenten ohne Verlust vor Qualitätseigenschaften gemeinsam dauerhaft stabil gelagert werden können und auf einfache Weise verwendet werden können.

Es ist vorteilhaft, wenn die Vorrichtung zum Ausbringen der fluiden Komponente gegenüberliegend des Verschlusskolbens angeordnet ist.
Dadurch wird ermöglicht, dass mittels des Verschlusskolbens die fluide Komponente aus dem Schlauchbeutel gedrückt werden kann und durch die Vorrichtung zum Ausbringen ausgedrückt werden kann.
Dabei wird in dem Moment, in dem der Verschlusskolben gegen den Schlauchbeutel gedrückt wird, dieser gegen die Vorrichtung zum Ausbringen gedrückt und dabei geöffnet.
Die Schlauchbeutel sind vorteilhafterweise an ihren beiden Enden mittels einer Klammer verschlossen.
In diesem Fall kann das Ende der Kartusche an denen sich die Produktauslässe befinden, eine Vertiefung zur Aufnahme der Verschlussklammer aufweisen.
Eine gleichartige Aufnahme im Bereich des Verschlusskolbens wirkt sich ebenfalls günstig auf die Entleerbarkeit des Systems aus.

Bei der Vorrichtung zum Ausbringen der fluiden Komponente kann jede Vorrichtung verwendet werden, die ein Ausbringen ermöglicht und vorteilhafterweise die meist zwei fluiden Komponenten optimal vermischt.

Die Erfindung wird nachfolgend anhand einer bevorzugten Ausführungsform und unter Bezugnahme der beigefügten Figuren näher erläutert.

Dabei zeigt in schematischer Darstellung:
Figur 1 eine herkömmliche Hartkartusche einteilig mit zwei Kolben im Querschnitt;
Figur 2 eine erfindungsgemäße Hartkartusche einteilig mit zwei Kolben und eingelegten Schlauchbeuteln im Querschnitt;
Figur 3 ein herkömmliches Schlauchbeutelsystem.

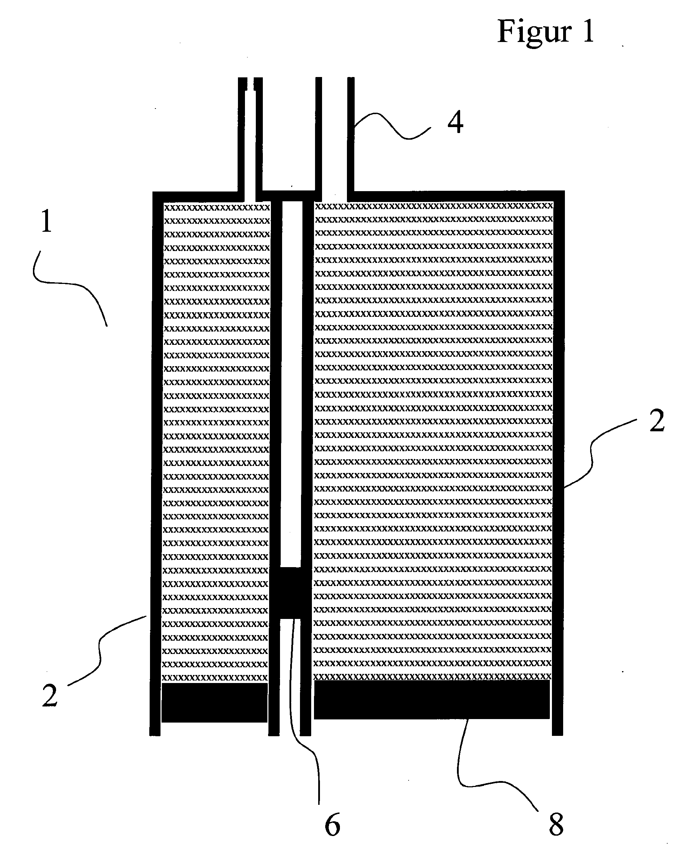

Figur 1 zeigt ein herkömmliches Hartkartuschensystem 1 welches zwei Kammern 2 aufweist. Die Kartuschenkammern 2 dienen zur Aufnahme des zu fördernden Materials.

Die Kammern der Hartkartuschen 2 weisen an einem Ende jeweils eine Vorrichtung zum Ausbringen 4 auf. Das hier dargestellte Hartkartuschensystem 1 besteht aus Hartkartuschen, welche aus Kunststoff ausgebildet sind und fest miteinander über einen Steg 6 verbunden sind.

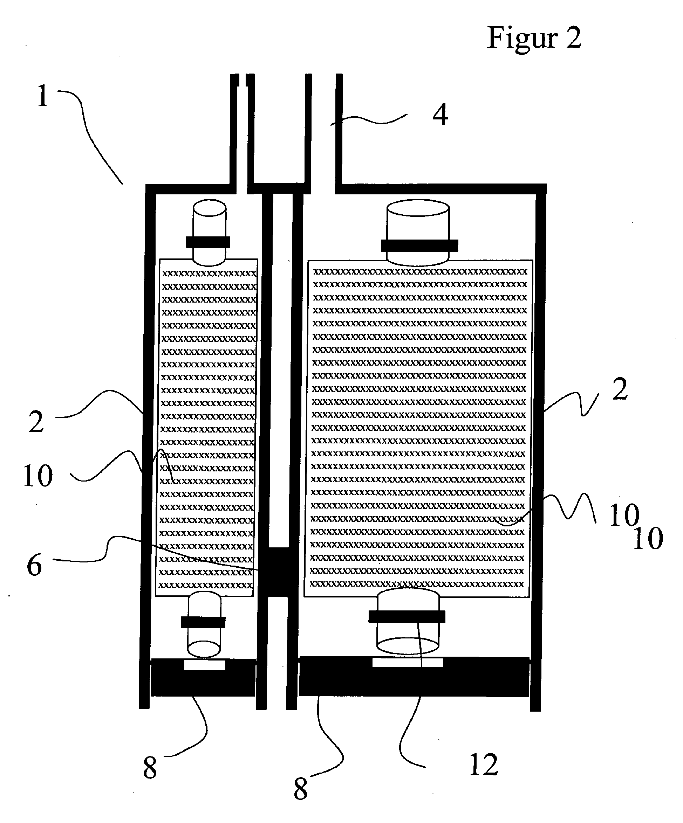

In Figur 2 ist ein erfindungsgemäßes Schlauchbeutelsystem zur Verwendung im dentalen Bereich dargestellt. Die Schlauchbeutel 10 befinden sich in einer hier dargestellten Zwei-Kammer-Hartkartusche 2. Die Vorrichtung weist zwei zur Wandung abdichtende Kolben 8 auf, die dazu dienen den Inhalt des Schlauchbeutels nach Öffnung durch einen Öffnungsmechanismus (hier nicht dargestellt), über die Auslässe 4 auszufördern und mittels eines dort angebrachten Mischers zu mischen. Vor Inbetriebnahme und zwischen den Entnahmen wird der Auslassbereich 4 durch hier nicht dargestellte Verschlussstopfen abgedichtet. Der abdichtende Kolben 8 weist zudem Vertiefungen zur Aufnahme der Verschlussvorrichtungen 12 auf.

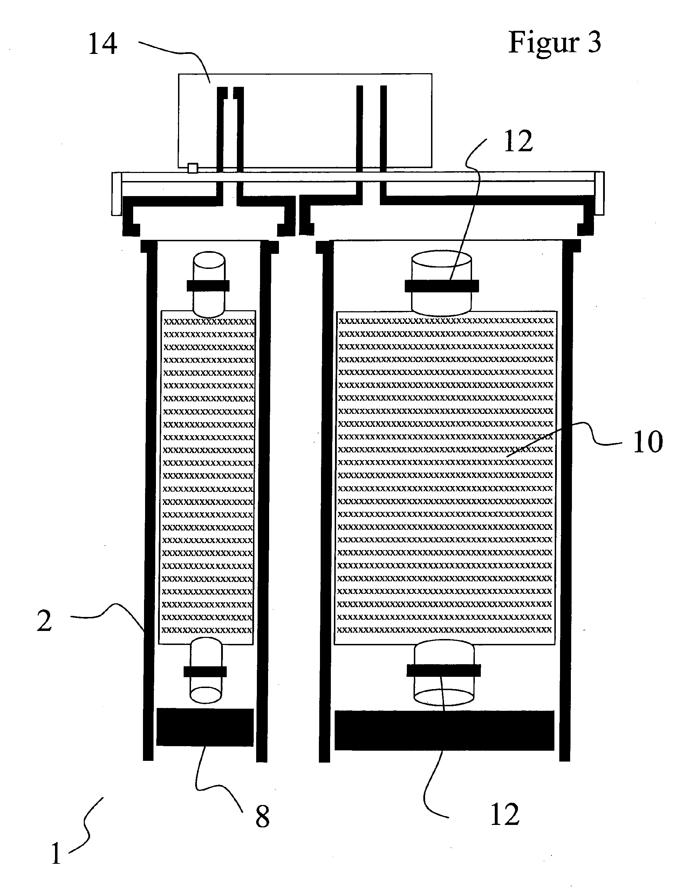

Figur 3 zeigt ein herkömmliches mehrteiliges Hartkartuschensystem 1 mit zwei Stützkartuschen 2, die optional auch untereinander verbunden sein können, einer Vorrichtung zum Ausbringen des sich in der Kartusche befindlichen Materials, die als eine Art Kopfplatte ausgebildet ist 14, sowie Schlauchbeutel 10, die innerhalb der Stützkartuschen 2 angeordnet sind. Die Schlauchbeutel 10 sind mittels Verschlussvorrichtungen 12 dicht verschlossen. Die Vorrichtung weist zwei nicht dichte Kolben 8 auf, die dazu dienen den Inhalt des Schlauchbeutels nach Öffnung durch einen Öffnungsmechanismus (hier nicht dargestellt), über die Auslässe in der Kopfplatte 14 auszufördern.

## Patentansprüche

1. Vorrichtung für den dentalen Bereich zur Lagerung und Ausbringung von zumindest einer fluiden Komponente, wobei die Vorrichtung zumindest eine Kartusche zur Aufnahme eines Schlauchbeutels aufweist, sowie eine Vorrichtung zum Ausbringen der fluiden Komponente, **dadurch gekennzeichnet, dass** die Kartusche den zumindest einen Schlauchbeutel dauerhaft und dicht einschließt.

2. Vorrichtung nach Anspruch 1, **dadurch gekennzeichnet, dass** der Schlauchbeutel in der Kartusche durch einen Kolben dauerhaft verschlossen ist.

3. Vorrichtung nach einem oder mehreren der vorhergegangenen Ansprüche, **dadurch gekennzeichnet, dass** der Kolben zum Auspressen der fluiden Komponente des Schlauchbeutels aus der Kartusche geeignet ist.

4. Vorrichtung nach einem oder mehreren der vorhergegangenen Ansprüche, **dadurch gekennzeichnet, dass** die Kartusche aus Kunststoff, vorzugsweise aus Polyethylen, Polypropylen, glasverstärktem Kunststoff, Polyamid oder einem Kunststoff mit guten Barriereeigenschaften gegenüber Umwelteinflüssen wie Feuchtigkeit, Lichteinfluss oder Gasen gebildet ist.

5. Vorrichtung nach einem oder mehreren der vorhergegangenen Ansprüche, **dadurch gekennzeichnet, dass** der Schlauchbeutel ein Verbundfolienbeutel ist.

6. Vorrichtung nach einem oder mehreren der vorhergegangenen Ansprüche, **dadurch gekennzeichnet, dass** der Verbundfolienbeutel aus drei Schichten besteht, bevorzugt aus einer Polypropylen-Aluminium-Polypropylenschicht.

7. Vorrichtung nach einem oder mehreren der vorhergegangenen Ansprüche, **dadurch gekennzeichnet, dass** die Vorrichtung zwei Kartuschen aufweist.

8. Vorrichtung nach einem oder mehreren der vorhergegangenen Ansprüche, **dadurch gekennzeichnet, dass** die Vorrichtung zum Ausbringen der fluiden Komponenten gegenüberliegend des Verschlusskolbens angeordnet ist.

9. Vorrichtung nach einem oder mehreren der vorhergegangenen Ansprüche, **dadurch gekennzeichnet, dass** der Schlauchbeutel an seinen Enden mittels einer Klammer verschlossen ist.
